# EUROPEAN PATENT SPECIFICATION

(11) **EP 3 040 612 B1**
(45) Date of publication and mention of the grant of the patent: **30.10.2019**
(21) Application number: 15200363.8
(22) Date of filing: 16.12.2015
(51) Int. Cl.: F23J 13/04, G01V 15/00

(54) **FLUE PIPES AND A GAS APPLIANCE CONNECTED WITH THE FLUE PIPES**
ABGASROHRE UND MIT DEN ABGASROHREN VERBUNDENE GASEINRICHTUNG
TUYAUX DE FUMÉE ET APPAREIL À GAZ CONNECTÉ AVEC DE TELS TUYAUX

(30) Priority: 31.12.2014 CN 201410857775
(43) Date of publication of application: 06.07.2016
(73) Proprietor: Vaillant (Wuxi) Heating Equipment Co., Ltd., Wuxi, Jiangsu 214028 (CN)
(72) Inventor: Lüttgens, Kay-Bernd, 45145 Essen (DE); Fischer, Christian, 42899 Remscheid (DE); Lehminger, Stefan, 51067 Köln (DE)
(74) Representative: Popp, Carsten

(56) References cited:
- DE-A1- 10 206 194
- JP-A- 2000 035 217
- US-A1- 2008 252 449

## Description

### FIELD OF THE INVENTION

The present invention relates to fields of domestic gas appliances, and particularly relates to flue pipes for domestic gas appliances.

### BACKGROUND OF THE INVENTION

Domestic gas heating appliances generally include gas water heaters, gas boilers, gas stoves and so on. A domestic gas appliance typically has a flue hood and a number of flue pipes connected with the flue hood for collecting combustion products (containing carbon monoxide and nitrogen oxides) of the gas appliance and exhausting them outside. The flue pipes generally includes a number of pipe sections connected in series, and these pipe sections are produced in accordance with appropriate safety standards by recognized suppliers and properly assembled in users' home according to corresponding specifications. However, in consideration of cost, dealers may adopt non-standard pipes or hire workers without professional training to assemble the pipes, which may result in instability of the pipe connection and cause risks of gas leakage.

Chinese published patent application CN103615806A discloses flue pipes with electrical conductors. When the pipe sections are connected in series, the electrical conductors of each pipe section are connected with each other and further electrically connected to a controller of a gas water heater. In this way, when there exists a mechanical connection problem of the pipe sections, the electrical connection of the conductors will be broken accordingly. Thus, the controller of the appliance will take certain security measures, such as stop running of the appliance.

However, if a non-authorized flue pipe section also employs an electrical conductor, and this flue pipe section is connected to the gas appliance, the controller could not recognize it, as a result, there still exists a risk if this flue pipe section could not meet the safety requirements.

A Japanese published patent application JP 2000 035217 A discloses a number of flue pipes for a combustion device are equipped with electrical leads and resistors for being used to judge a total length of the flue pipes. In this case, the resistor can be used to identify a length of certain pipe section. However, the mechanical connection of the pipes and the electrical connection of the leads and resistors are complicated, which costs a lot of time on installing. In addition, a straight pipe section and an elbow pipe section with the same length have different pressure loss, thus the estimation of pressure loss based on calculation of the length of pipe sections is not precise. Therefore, there is a need to provide a pipe section with an identification device that is able to give more characteristic information of the pipe section to a gas appliance being connected, or provide a simple way that can indicate the length of the pipe section.

A German published patent application DE 102 06 194 A1 discloses flue pipes for a ceramic oven have a long vertical section and are connected to the oven by a sloping section. A US published patent application US 2008/252449 A1 discloses a device having a transponder utilizing RFID for indicating the location and identification of hidden objects, like pipes, cables, or conduits buried in the soil without the need of any invasive and/or destructive work. The transponder can be read by a human operator via an antenna. Obviously, this non-contact identification means is too complicated, and results in a large increasement of cost if it was utilized to flue pipes for being identified by a gas appliance.

### SUMMARY OF THE INVENTION

It is an object of present invention to provide flue pipe sections and a gas appliance connected with the flue pipe sections, wherein each flue pipe section is equipped with an identification device so that the gas appliance can recognize it, thereby preventing non-authorized flue pipe sections from being connected to the gas appliance.

According to one aspect of the present invention there is provided a flue pipe section for a gas appliance comprising a pipe body with two opposite ends open and a microchip disposed on the pipe body. The microchip correlates with characteristic information of the pipe section. The flue pipe section further includes an electrical conductor for transmitting electrical current therein, and the microchip is connected with the electrical conductor.

Preferably, the electrical conductor comprises two electrical wires for transmitting electrical current in opposite directions, and the microchip is disposed in one of said two electrical wires.

Alternatively, the electrical conductor includes only one electrical wire, and the microchip is disposed in the electrical wire.

Preferably, the characteristic information of the pipe section includes the length of the pipe section, and/or the diameter of the pipe section.

Preferably, the characteristic information of the pipe section includes the pressure coefficient of the pipe section.

According to another aspect of the present invention there is provided a system including a flue pipe assembly composed of a number of flue pipe sections aforementioned and a gas appliance including a housing and a controller contained in the housing. Wherein, the controller is associated with the identification device of each flue pipe section to identify the characteristic information of the pipe section.

Preferably, the identification device further correlates with characteristic information of the gas appliance.

Preferably, the characteristic information of the gas appliance includes condensing type or non-condensing type of the gas appliance.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 is a schematic view showing a flue pipe assembly in accordance with a first embodiment of present invention connected with a gas water heater;
Fig. 2 is a perspective view showing two adjacent pipe sections of the flue pipe assembly as shown in Fig. 1 are connected via a first pipe connection mechanism;
Fig. 3 is similar to Fig. 2, wherein a connecting ring of the first pipe connection mechanism is removed;
Fig. 4 is a perspective view showing two separate adjacent pipe sections as shown in Fig. 3;
Fig. 5 is a perspective view showing the connecting ring of the pipe connection mechanism;
Fig. 6 is a perspective view showing an end pipe section is fixedly mounted to a wall via a first wall mounting mechanism;
Fig. 7 is a perspective view showing the end pipe section together with the first wall mounting mechanism as show in Fig. 6 from another aspect;
Fig. 8 is a perspective view showing a flue pipe assembly in accordance with a second embodiment of present invention, wherein two adjacent pipe sections of the flue pipe assembly are connected via a second pipe connection mechanism;
Fig. 9 is a perspective view showing two separate adjacent pipe sections as shown in Fig. 8;
Fig. 10 is a sectional view of the two connected pipe sections as shown in Fig. 8;
Fig. 11 is a schematic view showing a flue pipe assembly in accordance with a third embodiment of present invention, wherein two adjacent pipe sections of the flue pipe assembly are connected via a third pipe connection mechanism;
Fig. 12 is a schematic view of the pipe section as shown in Fig. 11 from another aspect;
Fig. 13 is a schematic sectional view showing a flue pipe assembly in accordance with a fourth embodiment of present invention, wherein an end pipe section is fixedly mounted to a wall via a second wall mounting mechanism;
Fig. 14 is an explosive view of the end pipe section and the second wall mounting mechanism as show in Fig. 13;
Fig. 15 is a schematic sectional view showing a flue pipe assembly in accordance with a fifth embodiment of present invention, wherein an end pipe section is fixedly mounted to a wall via a third wall mounting mechanism;
Fig. 16A-16C are schematic views showing the process of installing the end pipe section as shown in Fig. 15 to the wall via the third wall mounting mechanism.
Fig. 17 is a schematic view showing a flue pipe section equipped with an electrical resistor;
Fig. 18 is a block diagram showing a gas appliance is connected with flue pipe sections as shown in Fig. 17;
Fig. 19 is a schematic view showing a flue pipe section in a sixth embodiment of present invention, wherein the flue pipe section is equipped with a microchip;
Fig. 20 is a schematic view showing a flue pipe section, wherein the flue pipe section is equipped with fiber optic wires instead of the electrical conductor as shown in previous embodiments.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

Gas appliances could be fired with combustible gas, such as natural gas, city gas, liquefied petroleum gas, methane, etc., thereby supplying thermal energy for domestic usages. Such as gas water heaters for supplying hot water, gas boilers for supplying hot water and room heating, and gas stoves for cooking. A gas water heater will be exemplified hereinafter for illustrating the flue pipe assembly of present invention.

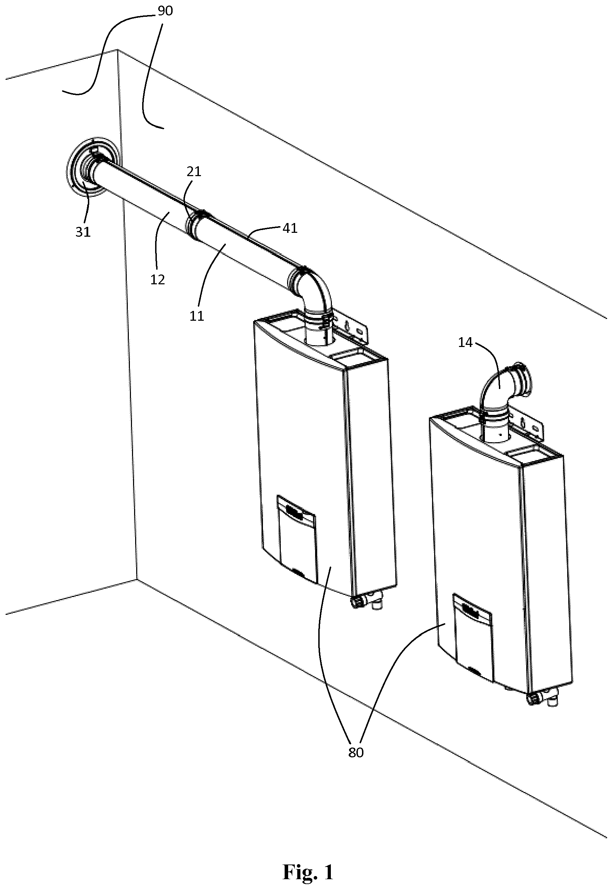

Refer to Fig. 1, a gas water heater 80 can be connected with a flue pipe assembly composed of a number of pipe sections to exhaust combustion products, or can be connected with an elbow pipe to exhaust combustion products, which depends on the position for installing the gas water heater in a room and layout of the room. The gas water heater may include a housing, a gas burner, a heat exchanger, a flue hood, and an air supply fan. Heat generated by the gas burner passes through the heat exchanger and is absorbed by cold water flowing through the heat exchanger. The combustion products are driven by the fan and collected by the flue hood, and further discharged outside via the flue pipe assembly which is connected with the flue hood. As the configurations of gas water heaters are well known in the art, a detailed explanation is omitted for sake of brevity.

Refer to Fig. 1 through Fig. 7, the pipe section can be a straight pipe, such as the pipe sections labeled in 11, 12, 13, can also be an elbow pipe, like the pipe section labeled in 14. Moreover, the pipe section can be an intermediate pipe, such as the pipe sections labeled in 11, 12, 14, can also be an end pipe extending through a wall 90, like the pipe section labeled in 13. Each intermediate pipe section has the same structure, and it has two opposite end portions with complementary configuration, in this way, two adjacent pipe sections can be connected fluently. Each intermediate pipe section 11, 12, 14 has a longitudinally extending slot defined in an outer wall thereof, and an electrical conductor 41 is received in the slot. In this embodiment, the electrical conductor is a cable including two electrical wires 411, 412, and a conductor base 511 is embedded in the outer wall at each end portion of the intermediate pipe section 11, 12, 14. The two electrical wires 411, 412 extend into the conductor base 511 and are respectively electrically connected with two conductive pads 5111, 5112 disposed on an upper surface of each conductor base.

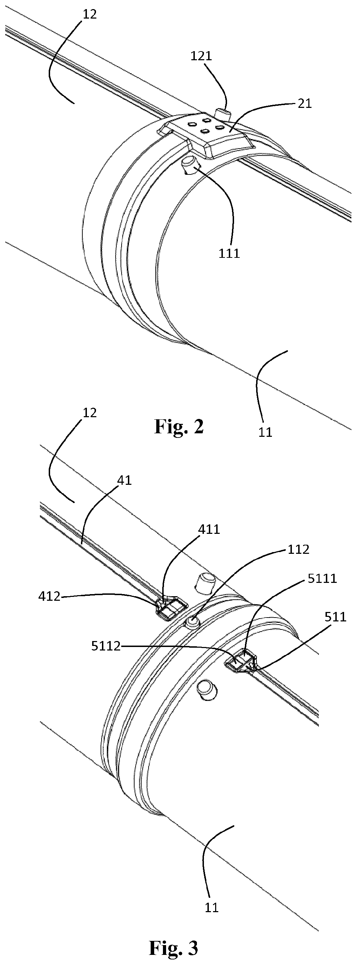

Fig. 2 through Fig. 5 show a first pipe section 11 and a second pipe section 12 which are positioned adjacent to each other and mechanically and electrically connected via a first pipe connection mechanism. The adjacent end portions of the first and the second pipe sections 11, 12 are provided with guiding post 112 and guiding groove 122 respectively, so that the two adjacent pipe sections can be connected fluently. In this embodiment, the end portion of the second pipe section 12 encircles the end portion of the first pipe section 11. The end portion of the second pipe section 12 circumferentially defines a receiving groove in an inner wall thereof, and a sealing member 101 is received in this receiving groove. In this way, the first and the second pipe sections 11, 12 are sealed at the connection therebetween. In this embodiment, the sealing member 101 is a sealing ring made of rubber material. It would be apparent to those skilled in the art that, in other embodiments, the guiding post and the guiding groove can change positions to each other, and the sealing member can also be disposed on the outer wall of the end portion of the first pipe section 11. In this embodiment, the first and the second pipe section 11, 12 are formed with positioning posts 111, 121 respectively on the outer wall of end portions thereof.

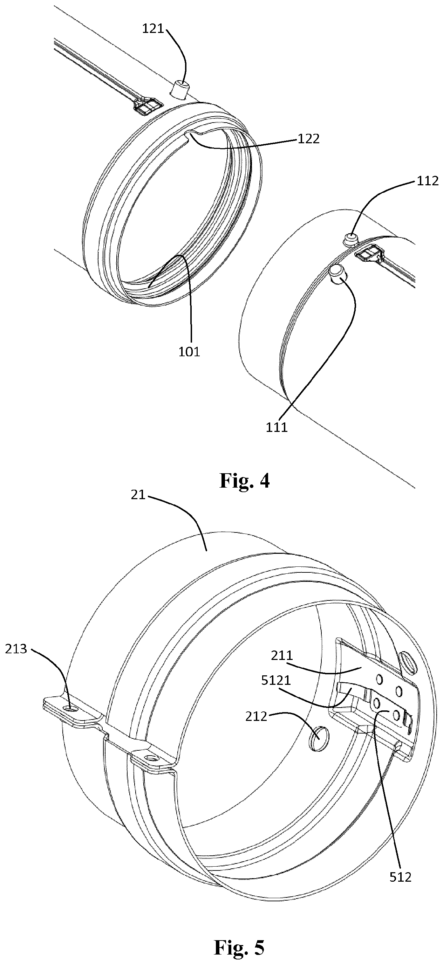

The pipe connection mechanism includes a fixed connection device for realization of a reliable mechanical connection between the first and the second pipe sections 11, 12. As shown in Fig. 5, the fixed connection device includes a connecting ring 21. This connecting ring 21 has a terminal receiving chamber 211, positioning holes 212, and mounting holes 213. The pipe connection mechanism further includes electrical terminals 512 fixed on the connecting ring 21 for establishing an electrical connection between a first electrical conductor of the first pipe section 11 and a second electrical conductor of the second pipe section 12. In this embodiment, the electrical terminals include two terminals (only one is shown in Fig. 5) both received in the terminal receiving chamber 211. Each electrical terminal 512 has a terminal body and an elastic contacting arm 5121. The terminal body is fixed in the terminal receiving chamber 211 with an insulative layer formed between the electrical terminal 512 and an inner wall of the terminal receiving chamber 211 to avoid an electrical conduction between the electrical terminals 512 and the connecting ring 21.

In assembling, the connecting ring 21 covers the adjacent end portions of the first and the second pipe sections 11, 12, and the connecting ring 21 is fixed to the first and the second pipe sections 11, 12 via the engagement of the positioning posts 111, 121 and the positioning holes 212. Fastening members (not shown), such as bolts can extend through the mounting holes to fasten the connecting ring 21 to the pipe sections and forming a solid connection between the first and the second pipe sections 11, 12. In the meantime, the two elastic contacting arms 5121 of the electrical terminals 512 contact against the conductive pads 5111, 5112 of the conductor bases of the first and the second pipe sections 11, 12 respectively, thereby realizing the electrical connection of the first and the second electrical conductors. The mechanical connection between adjacent pipe sections becomes stable and reliable by introducing the pipe connection mechanism, which can reduce the case of disconnection of pipe sections. Even if a disconnection of pipe sections happens or the installing of the flue pipe assembly does not meet the requirements, as a result, the electrical conductors connected in series are broken, then a controller of the gas water heater can sense it and take actions accordingly, such as stop running of the gas water heater to avoid leakage of flue gas.

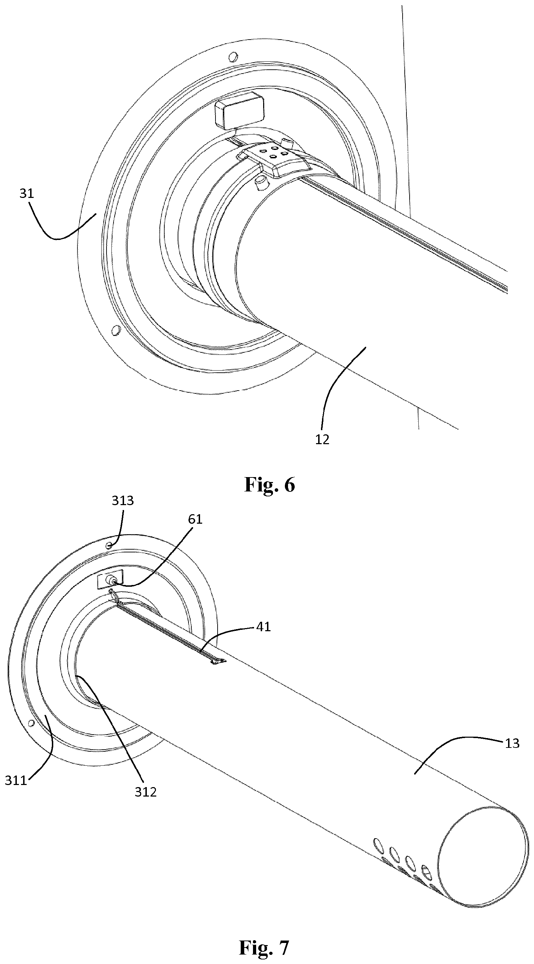

Refer to Figs. 6 and 7, a third pipe section, namely an end pipe section 13 extends through a wall and secures to the wall via a wall mounting mechanism. The end pipe section 13 has one end located inside the room and mechanically, electrically connected with an adjacent intermediate pipe section 12 via the pipe connection mechanism as described above. The wall mounting mechanism includes a mounting flange 31 with a central through hole for being passed through by the end pipe section 13. The through hole has a size substantially same as that of a cross section of the end pipe section 13. In this way, in case there is a reverse wind outside, the flue gas discharged outside would not return inner of the room via the gap between the end pipe section and the wall. The mounting flange 31 defines a circular groove at a surface thereof facing the wall for receiving a sealing element 311. In this embodiment, the sealing element is a sealing ring made of rubber material. When the mounting flange 31 is mounted onto the wall, the sealing element 31 forms a sealing between the wall and the flange to avoid the flue gas discharged outside return into the room. The mounting flange 31 defines mounting holes 313, and fastening members, such as bolts extend through the mounting holes 313 to fasten the mounting flange 31 onto the wall.

As shown in Fig. 7, a switch 61 is disposed at the surface of the mounting flange 31 facing to the wall, and the switch 61 is connected with a third electrical conductor of the end pipe section 13 in series. The switch 41 can be a pressing switch, a reed switch, or other contact switch, can also be a proximity switch, a photoelectric switch, or other non-contact switches. At the time when the mounting flange 31 is fixed to the wall 90, the switch 61 is turned on, and at the same time, an electric current is generated and passes through the parallel wires 411, 412 of the electrical conductor 41 in reverse directions. The end pipe section can be secured to the wall via the wall mounting mechanism, which can reduce the case of disconnection of pipe sections. Even if a disconnection of pipe sections happens or the installing of the flue pipe assembly does not meet the requirement, as a result, the switch is opened, then the controller of the gas water heater can sense it and take actions accordingly, such as stop running of the gas water heater to avoid leakage of flue gas.

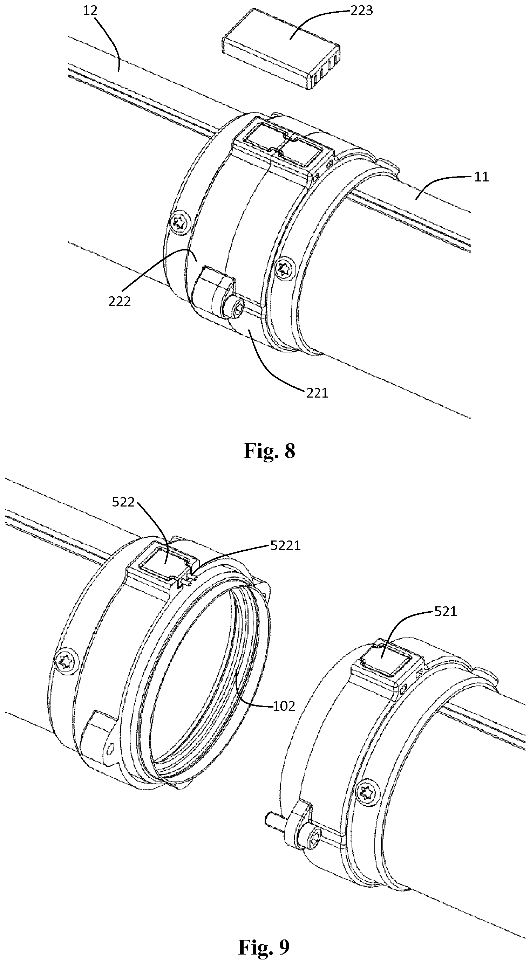

Fig. 8 through Fig. 10 shows a flue pipe assembly in accordance with a second embodiment of present invention. The main difference with respect to the first embodiment is that, the connecting ring includes a first portion 221 and a second portion 222. The first and the second portions 221, 222 are separate and fixed to adjacent end portions of the first and the second pipe sections 11, 12 respectively via bolts. The first and the second portions 221, 222 are respectively provided with terminal bases 521, 522. The electrical terminals include a female terminal (not shown) retained in the terminal base 521 and electrically connected to the first electrical conductor 42, and a male terminal 5221 retained in the terminal base 522 and electrically connected to the second electrical conductor 42. Each electrical conductor includes two wires 421. When the first pipe section 11 is connected with the second pipe section 12, the male terminal 5221 electrically contacts the female terminal, and the first portion 221 and the second portion 222 are fastened together via bolts. In addition, a dust-proof cover 223 covers the terminal bases 521, 522 after assembling. Similarly, a sealing member 102 is provided between the first and the second pipe section 11, 12 to ensure a sealing connection therebetween.

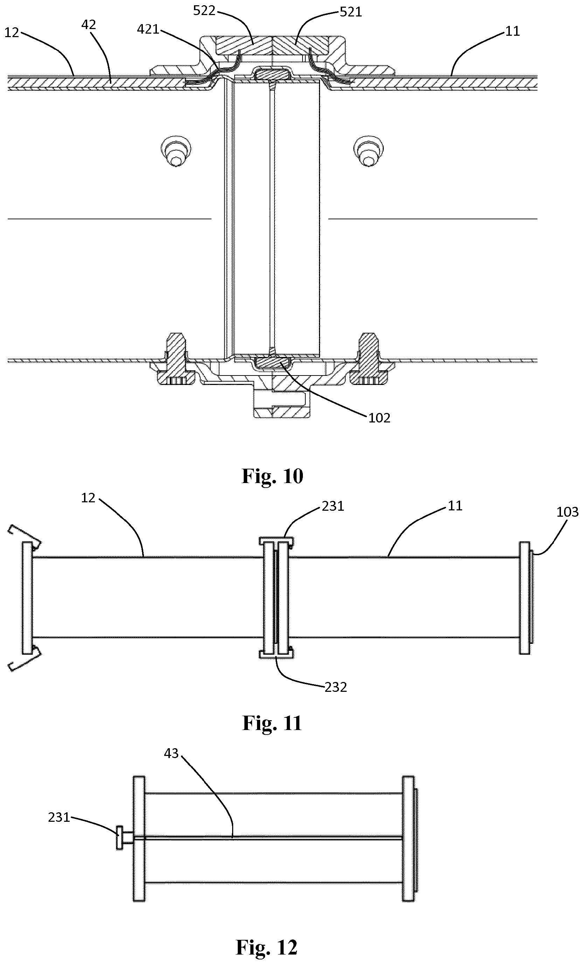

Figs. 11 and 12 show a third embodiment of the flue pipe assembly. In present embodiment, the electrical conductor 41 includes only one electrical wire, and the pipe sections are made of metallic material to perform as the other electrical wire as disclosed in aforementioned embodiments. The fixed connection device includes at least two latching members 231, 232, and these two latching members are both disposed at one end portion of a pipe section. When the first pipe section 11 is connected to the second pipe section 12, the two latching members 231, 232 each latches adjacent end portions of the first and the second pipe sections 11, 12, thereby achieving a reliable mechanical connection between the pipe sections. In this embodiment, the latching members 231, 232 also act as terminals to establish an electrical connection between the electrical conductors of the pipe sections. One latching member 231 is located adjacent to the electrical conductor 43, and it has a different design with respect to the other latching member 232. For example, the latching members have different structures, different size, or different colors. In this way, when connecting two pipe sections, the electrical conductors of the two pipe sections can be connected without mistakes. Similarly, a sealing member 103 is provided between the first and the second pipe section 11, 12 to ensure a sealing connection therebetween.

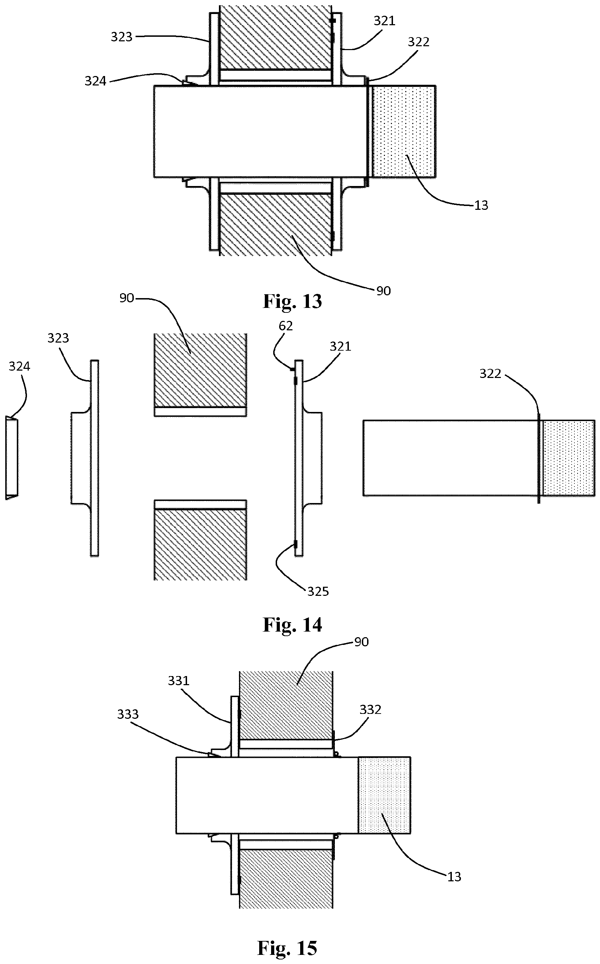

Figs. 13 and 14 show a fourth embodiment of the flue pipe assembly. In this embodiment, the wall mounting mechanism includes a mounting flange 321 and a retaining device. The retaining device includes a restricting member 322 encircling the end pipe section 13, an additional flange 323 having a central hole for being passed through by the end pipe section 13, and a circular wedge-shaped piece 324. When the wall mounting mechanism is attached to the wall 90, the mounting flange 321 and the additional mounting flange 323 are located at opposite sides of the wall 90. The mounting flange 321 has one side opposite to the wall 90 abuts against the restricting member 322, and the additional mounting flange 323 has one side opposite to the wall 90 is abut against by the wedge-shaped piece 324. By this means, the end pipe section 13 can be secured to the wall 90 reliably. Similar to the first embodiment, a switch 62 and a sealing member 325 are disposed between the mounting flange 321 and the wall 90.

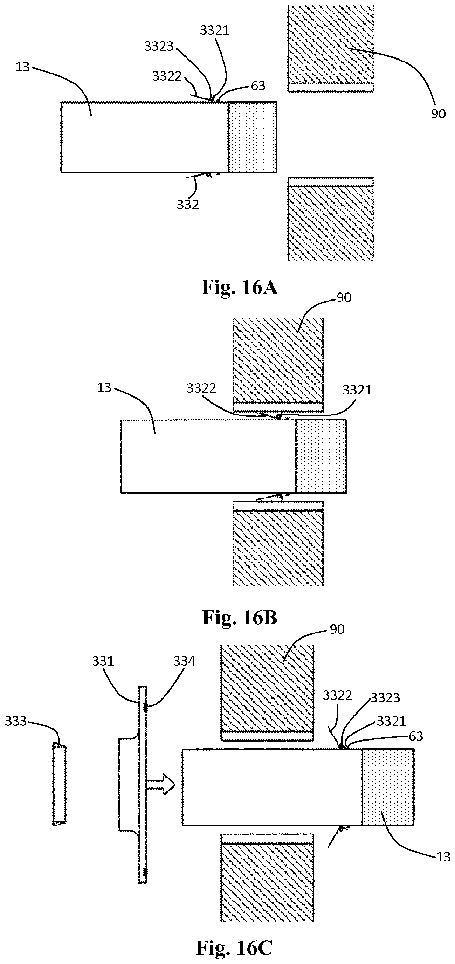

Fig. 15 and Figs. 16A-16C show a fifth embodiment of the flue pipe assembly. In this embodiment, the wall mounting mechanism includes a mounting flange 331 and a retaining device. The retaining device includes two restricting devices 332 and a circular wedge-shaped piece 333. Each restricting device 332 includes an first arm 3321 and an second arm 3322 forming an angle therebetween, and an torsion springs 3323 engaged with the first and the second arms 3321, 3322. The first and the second arms 3321, 3322 is able to together rotate on a pivot which is encircled by the torsion spring 3323. Besides, the first arm 3321 is shorter than the second arm 3322. In this embodiment, the switch 63 is provided on the end pipe section 13 and engageable with the first arm 3321.

Refer to Fig. 16A, under the action of the torsion spring 3323, the first arm 3321 and the second arm 3322 each has a distal end lift up above the end pipe section 13 in a natural state. Refer to Fig. 16B, when the end pipe section 13 extends through the wall 90, the second arm 3322 is pressed by the wall and return to its natural state after lost of interference with the wall. As shown in Fig. 16C, the mounting flange 331 and the wedge-shaped piece 333 are disposed at one side of the wall 90 opposite to the other side where the restricting device 332 positions. Refer back to Fig. 15, when the wall mounting mechanism is mounted to the wall, the mounting flange 331 is abut against by the wedge-shaped piece 333 at its one side, and the mounting flange 331 abuts against the wall 90 at its the other side. At the opposite side of the wall 90, the second arm 3322 is forced to abut against the wall, and the second arm 3321 pressed the switch to activate it on. Similarly, a sealing member 334 is disposed between the mounting flange 331 and the wall 90.

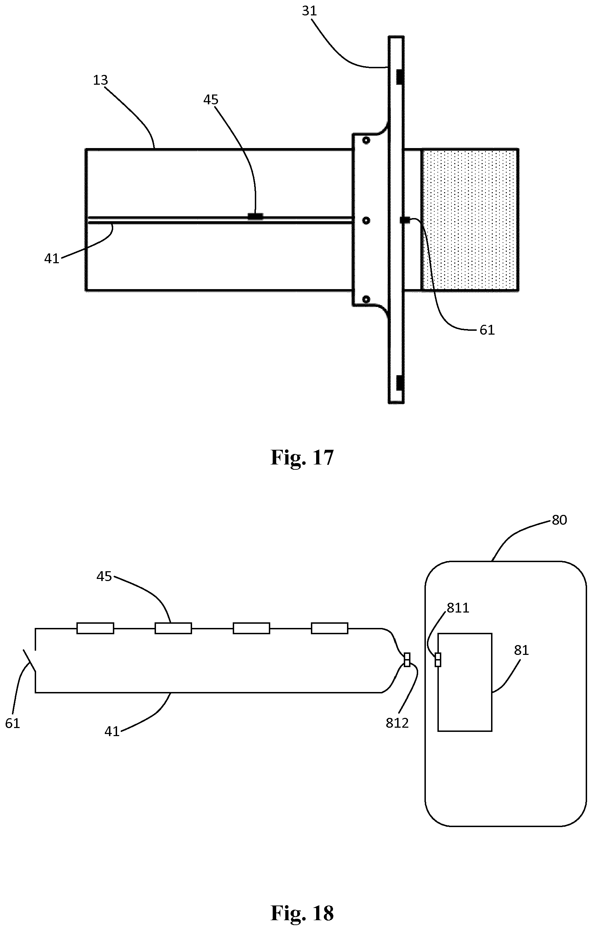

Figs. 17 and 18 show a further example of the flue pipe section 13. As shown in Fig. 17, the pipe section 13 has a pipe body with two opposite ends open, and an identification device 45 is disposed on the pipe body for indicating characteristic information of the pipe section 13. In this embodiment, the identification device is an impedance element, preferably an electrical resistor connected with the electrical conductor 41. The electrical conductor 41 includes two electrical wires for transmitting electrical current in opposite directions, and the electrical resistor 45 is disposed in one of the two electrical wires. In order to distinguish with the resistance of the electrical wires (usually a fraction of ohm), the resistance of the electrical resistor can be in a range between tens of ohms to thousands of ohms, or even greater. In other embodiments, the impedance element can also be an inductor or a capacitor.

As shown in Fig. 18, a flue pipe assembly can be composed of a number of pipe sections connected in series. These pipe sections can include middle pipe sections and end pipe sections, or straight pipe sections and elbow pipe sections, wherein, each pipe section is equipped with an electrical resistor 45. In this embodiment, a gas appliance can be a gas water heater, and it has a housing 80 and a controller 81 contained in the housing 80. The controller may be an electronic control system incorporating a Micro Controller Unit (MCU). Of course, the controller can also use other types of integrated circuits, such as Application Specific Integrated Circuit (ASIC) and Field Programmable Gate Array (FPGA) etc.. When the flue pipe assembly is connected with the gas water heater, the electrical resistors 45 and the electrical conductor 41 are serially connected to the controller 81 by an electrical connector 81 being plugged into a port 811 of the gas water heater. Therefore, as the mounting flange 31 together with the pipe section 13 is mounted to the wall, the switch 61 is closed, and the controller 81 can detect the resistance of the resistors 45. Since the resistor 45 has a specific resistance predetermined by the producer, the controller 81 is able to judge if there is a non-standard or non-authorized pipe section connected in the flue pipe assembly.

The resistance of the resistor on each pipe section can be the same, or can be different. In a preferred embodiment, as the multiple pipe sections connected in one flue pipe assembly may have different length size, the resistance of the resistor can correlate with the length of the pipe section where the resistor is disposed. For example, the resistance of the resistor and the length of corresponding pipe section have a linearly proportional relationship. By this means, the controller can calculate the total length of the flue pipe assembly based on the detected resistance of the resistors, thereby regulating the speed of a fan of the gas water heater for providing sufficient air pressure to exhaust flue gas outside via the flue pipe assembly. Moreover, the controller can detect the operating current of the fan. Normally, there is a standard value of the fan operating current corresponding to the total resistance of the connected pipe sections. When the controller finds that the actual value of the fan operating current is larger than the standard value, which means there could be a problem of exhausting the flue gas via the flue pipe assembly, for example, the flue pipe assembly may be partly or fully blocked, then the controller will take some measures, like turning off the gas valve, or stalling the appliance to avoid the occurrence of a safety accident.

Actually, the controller can deduce how big the pressure loss of the flue pipe assembly by calculating the total length of the connected pipe sections. However, a straight pipe section and an elbow pipe section with the same length have different pressure loss, thus the estimation of pressure loss based on calculation of the length of pipe sections is not precise. Therefore, in a preferred embodiment, the electrical resistor 45 correlates with the pressure coefficient of the pipe section, which makes the estimation of pressure loss easier and more precise. It would be apparent to those skilled in the art that, in the case that the electrical conductor only has one electrical wire, the electrical resistor is connected in this wire.

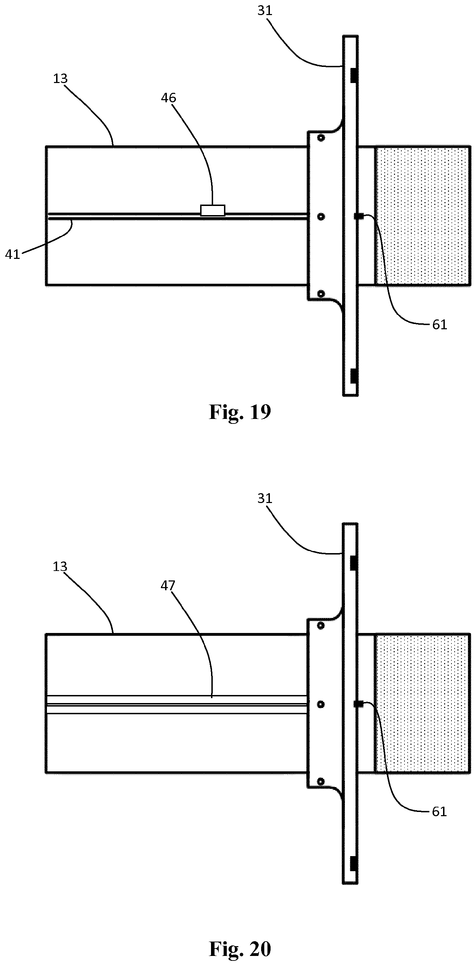

Fig. 19 shows a sixth embodiment of the flue pipe section 13. The main difference compared with the sixth embodiment is that, the identification device is a microchip 46 instead of the electrical resistor 45 shown in Fig. 17. In this embodiment, the microchip 46 is able to code a lot of characteristic information of the pipe section where the microchip is located, such as the length, the diameter, the pressure coefficient, etc.. Besides, the microchip 45 is able to further code characteristic information of the gas appliance to which the pipe section is connected, for example, the gas appliance is a condensing one or a non-condensing one. As similarly shown in Fig. 18, when the flue pipe sections are connected to the gas appliance, the controller 81 can read the coded information via the port 811, then the controller 81 decides what to do according to the detected information.

Fig. 20 shows further example of the flue pipe section 13. In this embodiment, the pipe section 13 is equipped with a pair of fiber optic wires 47 instead of the pair of electrical wires of the electrical conductor 41. The pair of fiber optic wires can transmit light in opposite directions. When a number of pipe sections are connected to the gas appliance, the fiber optic wires of each pipe section are connected with ones of other pipe sections to form a round-trip path. The gas appliance can be equipped with a light emitter and light receiver. The light emitter emits an optical signal, and the optical signal pass through the round-trip path then return to the light receiver. The controller counts a runtime of the optical signal. This runtime of the signal can correlate with the characteristic information of the pipe section, such as the length, or the pressure coefficient.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A flue pipe section (13) for a gas appliance (80) comprising a pipe body with two opposite ends open, and an electrical conductor (41) for transmitting electrical current therein; **characterized in that**, the flue pipe section comprises a microchip (46) disposed on the pipe body, and the microchip correlates with characteristic information of the flue pipe section, and the microchip (46) is connected with said electrical conductor.

2. A flue pipe section according to claim 1, **characterized in that** the electrical conductor comprises two electrical wires (411, 412) for transmitting electrical current in opposite directions, and the microchip (46) is disposed in one of said two electrical wires.

3. A flue pipe section according to claim 1, **characterized in that** the electrical conductor comprises only one electrical wire (43), and the microchip (46) is disposed in said electrical wire.

4. A flue pipe section according to claim 1, **characterized in that** said characteristic information of the pipe section comprises the length of the pipe section, and/or the diameter of the pipe section.

5. A flue pipe section according to claim 1, **characterized in that** said characteristic information of the pipe section comprises the pressure coefficient of the pipe section.

6. A system, comprising:
a flue pipe assembly comprising a plurality of flue pipe sections according to any of the claims 1-5;
a gas appliance comprising a housing and a controller contained in the housing; wherein
the controller is associated with the microchip of each flue pipe section to identify said characteristic information of the pipe section.

7. A system according to claim 6, **characterized in that** the microchip further correlates with characteristic information of the gas appliance.

8. A system according to claim 7, **characterized in that** the characteristic information of the gas appliance comprises condensing type or non-condensing type of the gas appliance.

## Patentansprüche

1. Abgasrohrabschnitt (13) für ein Gasgerät (80), umfassend einen Rohrkörper mit zwei gegenüberliegenden offenen Enden und einen elektrischen Leiter (41) zum Übertragen von elektrischem Strom darin;
**dadurch gekennzeichnet, dass** der Abgasrohrabschnitt einen Mikrochip (46) umfasst, der auf dem Rohrkörper angeordnet ist, und der Mikrochip mit charakteristischen Informationen des Abgasrohrabschnitts korreliert, und der Mikrochip (46) mit dem elektrischen Leiter verbunden ist.

2. Abgasrohrabschnitt nach Anspruch 1, **dadurch gekennzeichnet, dass** der elektrische Leiter zwei elektrische Drähte (411, 412) zum Übertragen von elektrischem Strom in entgegengesetzte Richtungen umfasst und der Mikrochip (46) in einem der zwei elektrischen Drähte angeordnet ist.

3. Abgasrohrabschnitt nach Anspruch 1, **dadurch gekennzeichnet, dass** der elektrische Leiter nur einen elektrischen Draht (43) umfasst und der Mikrochip (46) in dem elektrischen Draht angeordnet ist.

4. Abgasrohrabschnitt nach Anspruch 1, **dadurch gekennzeichnet, dass** die charakteristischen Informationen des Rohrabschnitts die Länge des Rohrabschnitts und/oder den Durchmesser des Rohrabschnitts umfassen.

5. Abgasrohrabschnitt nach Anspruch 1, **dadurch gekennzeichnet, dass** die charakteristischen Informationen des Rohrabschnitts den Druckkoeffizienten des Rohrabschnitts umfassen.

6. System, umfassend:
eine Abgasrohranordnung, umfassend eine Vielzahl von Abgasrohrabschnitten nach einem der Ansprüche 1-5;
ein Gasgerät, umfassend ein Gehäuse und eine Steuerung, die in dem Gehäuse enthalten ist; wobei
die Steuerung dem Mikrochip jedes Abgasrohrabschnitts zugeordnet ist, um die charakteristischen Informationen des Rohrabschnitts zu identifizieren.

7. System nach Anspruch 6, **dadurch gekennzeichnet, dass** der Mikrochip weiter mit charakteristischen Informationen des Gasgerätes korreliert.

8. System nach Anspruch 7, **dadurch gekennzeichnet, dass** die charakteristischen Informationen des Gasgerätes eine kondensierende Art oder nicht-kondensierende Art des Gasgerätes umfassen.

## Revendications

1. Section de tuyau de fumée (13) pour un appareil à gaz (80) comprenant un corps de tuyau avec deux extrémités opposées ouvertes, et un conducteur électrique (41) pour la transmission de courant électrique à l'intérieur ;
**caractérisée en ce que** la section de tuyau de fumée comprend une micropuce (46) disposée sur le corps de tuyau, et la micropuce est en corrélation avec des informations caractéristiques de la section de tuyau de fumée, et la micropuce (46) est connectée avec ledit conducteur électrique.

2. Section de tuyau de fumée selon la revendication 1, **caractérisée en ce que** le conducteur électrique comprend deux fils électriques (411, 412) pour la transmission de courant électrique dans des directions opposées, et la micropuce (46) est disposée dans un desdits deux fils électriques.

3. Section de tuyau de fumée selon la revendication 1, **caractérisée en ce que** le conducteur électrique comprend seulement un fil électrique (43), et la micropuce (46) est disposée dans ledit fil électrique.

4. Section de tuyau de fumée selon la revendication 1, **caractérisée en ce que** lesdites informations caractéristiques de la section de tuyau comprennent la longueur de la section de tuyau, et/ou le diamètre de la section de tuyau.

5. Section de tuyau de fumée selon la revendication 1, **caractérisée en ce que** lesdites informations caractéristiques de la section de tuyau comprennent le coefficient de pression de la section de tuyau.

6. Système, comprenant :
un ensemble de tuyau de fumée comprenant une pluralité de sections de tuyau de fumée selon l'une quelconque des revendications 1-5 ;
un appareil à gaz comprenant un boîtier et un dispositif de commande contenu dans le boîtier ; dans lequel
le dispositif de commande est associé à la micropuce de chaque section de tuyau de fumée pour identifier lesdites informations caractéristiques de la section de tuyau.

7. Système selon la revendication 6, **caractérisé en ce que** la micropuce est en outre en corrélation avec des informations caractéristiques de l'appareil à gaz.

8. Système selon la revendication 7, **caractérisé en ce que** les informations caractéristiques de l'appareil à gaz comprennent le type de condensation ou type de non condensation de l'appareil à gaz.
